# EUROPÄISCHE PATENTSCHRIFT

(11) **EP 2 252 752 B1**
(45) Veröffentlichungstag und Bekanntmachung des Hinweises auf die Patenterteilung: **07.08.2013**
(21) Anmeldenummer: 09721971.1
(22) Anmeldetag: 14.03.2009
(51) Int. Cl.: E05B 17/22, B60J 5/04, B60J 10/08

(54) **VORRICHTUNG ZUR REALISIERUNG EINES TROCKENEN ELEKTRISCHEN ANSCHLUSSES EINES KRAFTFAHRZEUGSCHLOSSES**
DEVICE FOR IMPLEMENTING A DRY ELECTRICAL CONNECTION OF A MOTOR VEHICLE LOCK
DISPOSITIF PERMETTANT DE RÉALISER UNE CONNEXION ÉLECTRIQUE SÈCHE D'UNE SERRURE DE VÉHICULE AUTOMOBILE

(30) Priorität: 20.03.2008 DE 202008003886 U
(43) Veröffentlichungstag der Anmeldung: 24.11.2010
(73) Patentinhaber: Kiekert Aktiengesellschaft, 42579 Heiligenhaus (DE)
(72) Erfinder: ALBERS, Sven, 42781 Haan (DE)
(86) Internationale Anmeldenummer: PCT/DE2009/000358
(87) Internationale Veröffentlichungsnummer: WO 2009/115080

(56) Entgegenhaltungen:
- DE-U1-202006 007 263
- FR-A- 2 802 153

## Beschreibung

Die vorliegende Erfindung betrifft eine Vorrichtung umfassend ein Schlossgehäuse und ein Befestigungsteil für das Schlossgehäuse, wie aus dem Oberbegriff von Anspruch 1 bekannt.

Zur Realisierung eines elektrischen Anschlusses hin zu den einzelnen Komponenten eines Kraftahrzeugschlosses, wie beispielsweise elektrische Motoren, Mikroschalter, Sensoren etc., ist es gegebenenfalls erforderlich, eine Abdichtung der Öffnung vorzunehmen, um zu gewährleisten, dass Feuchtigkeit, die im Bereich außerhalb des Schlossgehäuses auftreten kann, nicht auf die gegenüberliegende Seite des Befestigungsteils und/oder in die elektrischen Anschlüsse eindringen kann. Zu diesem Zweck wurde bereits eine Vielzahl unterschiedlicher Maßnahmen vorgeschlagen, die jedoch nur teilweise die Forderungen an eine kompakte Bauform, eine einfache Montage, günstige Herstellung und/oder eine dauerhafte Dichtungswirkung ausreichend gewährleisten können.

Aus der DE 20 2006 007 263 U1 ist es für den elektrischen Betrieb eines Türschlosses bekannt, mindestens einen elektrischen Anschluss durch eine Trägerplatte bzw. ein Türblech zur realisieren, der separat gegen Feuchtigkeit abgedichtet werden muss, beipielsweise durch Anspritzen einer Dichtung oder Auftragen eines Dichtungsmittels, vorzugsweise einer Dichtungsmasse.

Die FR-A- 28 02 153 offenbart eine Lautsprecher - Abdichtung in einem Türmodul mit über Stifte fixierter Dichtfolie.

Aufgabe der vorliegenden Erfindung ist es, die mit Bezug auf den Stand der Technik geschilderten Probleme zumindest teilweise zu lösen. Insbesondere sollen Vorrichtungen angegeben werden, die eine Feuchtigkeitsdichtung auch bei relativ großen Fertigungstoleranzen der miteinander zu verbindenden Bauteile realisieren soll. Gleichzeitig sollen die Dichtungskomponenten kostengünstig herstellbar und unter verschiedenen Einsatzbedingungen montierbar sein.

Diese Aufgabe wird gelöst mit einer Vorrichtung gemäß den Merkmalen des Schutzanspruchs 1. Weitere vorteilhafte Ausgestaltungen sind in den abhängig formulierten Schutzansprüchen angegeben. Die Beschreibung, insbesondere im Zusammenhang mit den Figuren, erläutert die Erfindung weiter und gibt weitere Ausführungsbeispiele an.

Die erfindungsgemäße Vorrichtung umfasst ein Schlossgehäuse und ein Befestigungsteil für das Schlossgehäuse, bei der ein elektrischer Anschluss durch eine Öffnung des Befestigungsteils hindurch mit dem Schlossgehäuse realisiert ist, wobei das Befestigungsteil ein Türmodulträger einer Kraftfahrzeugtür ist, welches zumindest teilweise einen Nassraum und einen Trockenraum der Kraftfahrzeugtür begrenzt, wobei eine erste Seite des Befestigungsteils hin zum Nassraum ausgerichtet ist, wobei das Schlossgehäuse einen externen Stecker aufweist, und ein Anschlussstecker durch die Öffnung hindurch vom Trockenraum zum Nassraum in den Stecker einführbar ist. Des Weiteren ist der externe Stecker des Schlossgehäuses beabstandet zum Befestigungsteil positioniert. Am Umfang des Steckers ist eine flexible Manschette befestigt, die sich bis hin zur ersten Seite des Befestigungsteils erstreckt und mit einer Distanz zur Öffnung des Befestigungsteils eine Dichtung bildet.

Das Schlossgehäuse beherbergt neben elektronischen Komponenten insbesondere auch ein so genanntes Gesperre, welches in der Regel zumindest eine Sperrklinke und eine Drehfalle umfasst. Die elektronischen bzw. die elektrischen Komponenten im Schlossgehäuse selbst können zum Betrieb des Gesperres und/oder zur Überwachung bestimmter Stellungen des Gesperres dienen. Jedenfalls ist zu gewährleisten, dass diese elektrischen bzw. elektronischen Komponenten mit Strom versorgt werden können, was über den Stecker erfolgt. Das Schlossgehäuse ist dabei bevorzugt aus Kunststoff wie ebenfalls auch der externe Stecker. "Extern" soll insbesondere bedeuten, dass der Stecker hervorstehend, also über das Schlossgehäuse hinausragend, ausgebildet ist. In montierter Position des Schlossgehäuses, beziehungsweise des daran befestigten Steckers, ist der Stecker gleichwohl beabstandet zur Öffnung. Das heißt mit anderen Worten auch, dass kein Kontakt zwischen Stecker und Befestigungsteil bzw. Öffnung vorliegt. Um nun-mehr den Zwischenraum zwischen Stecker und Öffnung bzw. Befestigungsteil gegen Feuchtigkeit abzudichten wird hier eine flexible Manschette vorgeschlagen. Diese ist einerseits am Umfang des externen Steckers angebracht. Von dieser Stelle aus erstreckt sich die flexible Manschette bis hin zum Befestigungsteil, wobei sie auch hier nicht direkt mit der Öffnung zusammenwirkt, sondern in einer vorgegebenen Distanz zur Öffnung auf der Oberfläche des Befestigungsteils eine, insbesondere feuchtigkeitsdichte, Dichtung bildet. Die Distanz beträgt zumindest mehrere Millimeter, bevorzugt auch mehr als 10 mm. Diese Ausgestaltung der Manschette gewährleistet eine Dichtung auch für den Fall, wenn die Lage bzw. Gestalt der Öffnung mit größeren Fertigungstoleranzen in einer Serienfertigung bereitgestellt wird. Auch kann so der Abstand von Stecker und Öffnung durch ein einfach aufgebautes Dichtmittel überbrückt werden.

Besonders bevorzugt ist dabei die Ausgestaltung, dass das Befestigungsteil ein Türmodulträger einer Kraftfahrzeugtür ist, welches zumindest teilweise einen Nassraum und einen Trockenraum der Kraftfahrzeugtür begrenzt, wobei die erste Seite des Befestigungsteils hin zum Nassraum ausgerichtet ist. Als "Türmodulträger" wird insbesondere ein Bauteil angesehen, welches für die Funktion in der Tür wichtige Bauteilkomponenten bzw. Aggregate aufnimmt. Hierzu kommen insbesondere Schließsysteme, Antriebe für Fensterheber, Antriebssysteme für die Kraftfahrzeugtür selbst, etc. in Betracht. Der Trockenraum ist bei einer Kraftfahrzeugtür regelmäßig hin zum Fahrgastraum ausgerichtet, während der Nassraum hin zur äußeren Umgebung ausgerichtet ist. Eine Abdichtung dieser beiden Räume kann insbesondere über diesen Türmodulträger erfolgen.

Darüber hinaus wird als vorteilhaft angesehen, dass der Stecker gegenüber der Öffnung ausgerichtet ist, insbesondere so, dass Stecker und Öffnung auf einer gemeinsamen Achse quer zum Befestigungsteil liegen. Dies eröffnet beispielsweise die Möglichkeit, einen Anschlussstecker durch die Öffnung geradlinig hin zum Stecker des Schlossgehäuses zu montieren. Gegebenenfalls kann dabei sogar die Öffnung als Justierhilfe bzw. Führung dienen.

Des Weiteren wird vorgeschlagen, dass der Stecker ein vom Schlossgehäuse separat ausgeführtes, und insbesondere ein an das Schlossgehäuse montiertes, Bauteil ist. Dies heißt mit anderen Worten insbesondere, dass der Stecker nicht einteilig mit dem Schlossgehäuse ausgeführt ist, sondern insbesondere ein anderes Material bzw. eine andere Materialform aufweist.

Gemäß einer Weiterbildung wird die flexible Manschette aus einem gummiartigen Werkstoff gebildet. Die flexible Manschette ist damit letztendlich mit einem sehr widerstandsfesten und flexiblen Material ausgeführt, so dass insbesondere auch Relativbewegungen von Stecker und Befestigungsbauteil während des späteren Einsatzes im Kraftfahrzeug auch unter extremen Temperaturbedingungen und Fahrzeugerschütterungen kompensiert werden können.

Vorteilhaft ist auch, dass die flexible Manschette am Umfang des Steckers einen Basisabschnitt aufweist, der verstärkt ausgeführt ist, insbesondere aufweisend wenigstens eines der folgenden Merkmale: einen gegenüber anderen Abschnitten der flexiblen Manschette dickere Materialstärke, wenigstens eine Einlagerung aus einem gegenüber anderen Abschnitten der flexiblen Manschette verschiedenen Material, wenigstens eine Verstärkungsstruktur. Mit diesen Maßnahmen kann insbesondere die Befestigung der flexiblen Manschette am Umfang des Steckers sicherer ausgeführt werden. Mit einer größeren Materialstärke im Bereich des Basisabschnitts wird die Formsteifigkeit verbessert und damit insbesondere auch ein Ablösen vom Stecker verhindert. Die Einlagerung kann außen und/oder im Inneren der Manschette vorgesehen sein. Die Einlagerung erlaubt es insbesondere, eine verstärkte Anpresskraft in Richtung des Steckers über den Umfang zu realisieren. Als Einlagerung kommen insbesondere umlaufende Federringe oder dergleichen in Betracht. Insbesondere wird hierzu ein Material eingesetzt, welches eine höhere Verformungssteifigkeit gegenüber der flexiblen Manschette aufweist, beispielsweise auch Metall. Außerdem können auch Verstärkungsstrukturen vorgesehen sein, die beispielsweise die Formsteifigkeit erhöhen und/oder mit externen Mitteln zusammenwirken, um hier eine Art Verankerung zu bewirken.

Des Weiteren kann die flexible Manschette am Umfang des Steckers unverlierbar verbunden sein. Dies kann allein über einen Formschluss erfolgen, gegebenenfalls sind aber auch stoffschlüssige Verbindungen und/oder Klebeverbindungen sinnvoll.

Einer Weiterbildung der Vorrichtung zufolge ist die flexible Manschette in einem Dichtungsabschnitt an dem Befestigungsteil mit einer, insbesondere umlaufenden, Wulst ausgeführt. Die Wulst bildet dabei insbesondere eine Art Verdickung im Endbereich der Manschette, die umlaufend ausgebildet ist. Die Manschette liegt dabei mit der Wulst an dem Befestigungsteil an. Mit dieser Wulst wird der Öffnungsquerschnitt der Manschette in diesem Bereich verstärkt, wobei insbesondere ein Einknicken der flexiblen Manschette bei der Montage vermieden wird. Damit wird auch sichergestellt, dass sich die Manschette sicher über die gegenüberliegende Öffnung mit einer Distanz erstreckt.

Die flexible Manschette kann ferner zwischen einem Basisabschnitt am Umfang des Steckers und einem Dichtungsabschnitt an dem Befestigungsteil ein Federelement bilden, mit dem der Dichtungsabschnitt an das Befestigungsteil gedrückt wird. Das Federelement kann insbesondere durch Stauchen bzw. Verformen eines Materialabschnittes der flexiblen Manschette gebildet sein, folglich eine elastische Verformung der flexiblen Manschette (nur) im Zwischenbereich zwischen Basisabschnitt und Dichtungsabschnitt zur Folge haben. Damit wird der Dichtungsabschnitt hin zum Befestigungsteil gedrückt, so dass ein Dichtungssitz mit Vorspannung gebildet ist.

Bevorzugt ist auch, dass die flexible Manschette an dem Befestigungsteil nur anliegt. Damit ist insbesondere gemeint, dass hier zusätzliche Dichtungs- bzw. Fixierungsmittel vorgesehen sind. Dies erlaubt in Extremsituationen auch, dass sich der Dichtungsabschnitt gegenüber dem Befestigungsteil geringfügig verschiebt, wobei die Dichtheit gleichwohl durch einen ausreichenden Anpressdruck an die erste Seite des Befestigungsteils gewährleistet ist.

Einer Weiterbildung der Vorrichtung zufolge bildet die flexible Manschette zwischen dem Basisabschnitt am Umfang des Steckers und dem Dichtungsabschnitt an dem Befestigungsteil einen sich hin zum Dichtungsabschnitt öffnenden, insbesondere glatten, Konus. Damit wird insbesondere zum Ausdruck gebracht, dass sich der Öffnungsquerschnitt vom Stecker hin zur Öffnung aufweitet, wobei mit "Konus" hier die innere und äußere Mantelfläche der flexiblen Manschette bevorzugt gleichermaßen gemeint ist. Mit "glatt" soll insbesondere zum Ausdruck gebracht werden, dass hier kein Faltenbalg oder dergleichen vorgesehen ist, wodurch die einfache Herstellung der flexiblen Manschette begünstigt wird.

Darüber hinaus wird als vorteilhaft angesehen, dass die flexible Manschette einen Basisabschnitt am Umfang des Steckers und einen Dichtungsabschnitt an dem Befestigungsteil bildet, wobei der Basisabschnitt und Dichtungsabschnitt einen voneinander verschiedenen Öffnungsquerschnitt aufweisen. Auch hier bietet die flexible Manschette eine hohe Gestaltungsfreiheit bezüglich der beiden miteinander abzudichtenden Komponenten. Insbesondere ist der Öffnungsquerschnitt im Bereich des Basisabschnitts mit einer anderen Querschnittsform gebildet, beispielsweise viereckig, gegenüber einem im Wesentlichen runden Öffnungsquerschnitt im Bereich des Dichtungsabschnitts.

Darüber hinaus kann es vorteilhaft sein, das Befestigungsteil im Bereich der Öffnung mit einer Auswölbung hin zum Schlossgehäuse zu versehen. Dabei ist beispielsweise der Krümmungsradius der Auswölbung so zu wählen, dass er sich an dem Öffnungsquerschnitt im Bereich des Dichtungsabschnitts der flexiblen Manschette anschließt, also dort hinein erstreckt. Damit kann der Dichtungssitz weiter verbessert werden. Bevorzugt ist dabei auch, dass die Auswölbung größer ausgeführt ist, als der Öffnungsquerschnitt der Manschette im Bereich des Dichtungsabschnitts.

Gerade in diesem Zusammenhang wird als vorteilhaft angesehen, dass das Schlossgehäuse mit Befestigungsmitteln an dem Befestigungsteil fixiert ist, welche von der Auswölbung beabstandet sind. Also insbesondere sollen die Befestigungsmittel nicht die Auswölbung durchdringen. Die Befestigungsmittel sind üblicherweise Schrauben, Nieten und andere lösbare und/oder nicht lösbare Verbindungen.

Für einen besonders einfachen Aufbau eines solchen Schlosses ist insbesondere vorgesehen, dass alle elektrischen Anschlüsse zum Betrieb des Schlosses über den einen Stecker mit der flexiblen Manschette in den Trockenraum der Kraftfahrzeugtür laufen.

Außerdem wird auch als vorteilhaft angesehen, dass der Stecker an seinem Umfang mit einem Kragen ausgeführt ist, der von einem Basisabschnitt der flexiblen Manschette umgriffen ist. Hierzu wird also insbesondere ein Formschluss realisiert, der beispielsweise selbst eine Art Labyrinth-Dichtung bildet. Bevorzugt ist, dass nur ein solcher Umgriff gebildet ist, also auf weitere Befestigungs- und/oder Dichtungsmittel im Wesentlichen an dieser Stelle verzichtet wird.

Darüber hinaus kann es auch vorteilhaft sein, dass das Schlossgehäuse Abstandshalter hin zum Befestigungsteil aufweist. Diese können beispielsweise auch mit der Auswölbung eines Befestigungsteils zusammenwirken und somit eine weitere Annäherung des Steckers bzw. des Schlossgehäuses hin zum Befestigungsteil vermeiden.

Die Erfindung sowie das technische Umfeld werden unter Bezugnahme auf die beigefügten Figuren näher erläutert, wobei darauf hinzuweisen ist, dass die Figuren zwar besonders bevorzugte Ausrührungsvarianten der Erfindung aufzeigen, diese jedoch nicht darauf beschränkt ist.

Es zeigen schematisch:
- Fig. 1:: eine erste Ausführungsvariante der erfindungsgemäßen Vorrichtung,
- Fig. 2:: eine perspektivische Darstellung einer weiteren Ausführungsvariante der erfindungsgemäßen Vorrichtung,
- Fig. 3:: ein Detail einer weiteren Ausführungsvariante der erfindungsgemäßen Vorrichtung, und
- Fig. 4:: eine weitere Ausführungsvariante einer flexiblen Manschette.

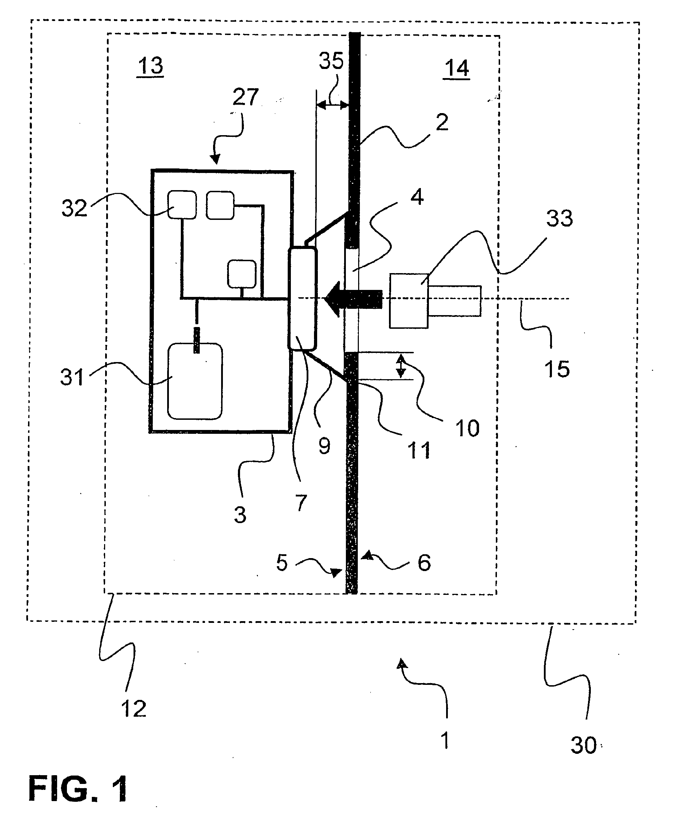

Fig. 1 veranschaulicht schematisch die Ausführung einer erfindungsgemäßen Vorrichtung 1 in ein Kraftfahrzeug 30. Das Kraftfahrzeug 30 weist dabei eine Kraftfahrzeugtür 12 auf, in deren Inneren sich ein Befestigungsteil 2 hindurch erstreckt. Dabei separiert das Befestigungsteil 2 den Innenraum der Kraftfahrzeugtür 12 in einen Nassraum 13 und einen Trockenraum 14. Im Nassraum 13 ist dabei ein Schloss 27 angeordnet, in dem beispielsweise verschiedene elektrische bzw. elektronische Komponenten angeordnet sind, die von einem Schlossgehäuse 3 umgeben sind. Beispielhaft für solche elektrischen bzw. elektronische Komponenten sind hier diverse Sensoren 32 und ein Motor 31 dargestellt. Diese weisen entsprechende elektrische Anschlüsse auf, die über den Stecker 7 eine elektrische Verbindung hin zum Trockenraum 14 realisieren. Das Schlossgehäuse 3 ist nun so an einer ersten Seite 5, die hin zum Nassraum 13 weist, fixiert, dass der hervorstehende, externe Stecker 7 mit einem Abstand 35 hin zum Befestigungsteil 2 bzw. der darin versehenden Öffnung 4 positioniert ist. An diesem Stecker 7 ist nunmehr eine flexible Manschette 9 vorgesehen, die diesen Abstand 35 überbrückt. Dabei hat die flexible Manschette 9 eine solche, sich öffnende Gestalt, dass diese an der ersten Seite 5 des Befestigungsteils 2 zur Anlage kommt und somit mit einer Distanz 10 zur Öffnung 4 eine Dichtung 11, insbesondere eine Feuchtigkeitsdichtung, bildet. Durch die Gestalt bzw. die Anbringung der flexiblen Manschette 9 ist es nunmehr möglich, leicht und beispielsweise ohne eine Beschädigung der flexiblen Manschette 9 zu befürchten, am Trockenraum 14 bzw. der zweiten Seite 6 des Befestigungsteils 2 einen Anschlussstecker 33 entlang der Achse 15 durch die Öffnung 4 hin zu dem Stecker 7 einzuführen und so den elektrischen Anschluss zu verwirklichen.

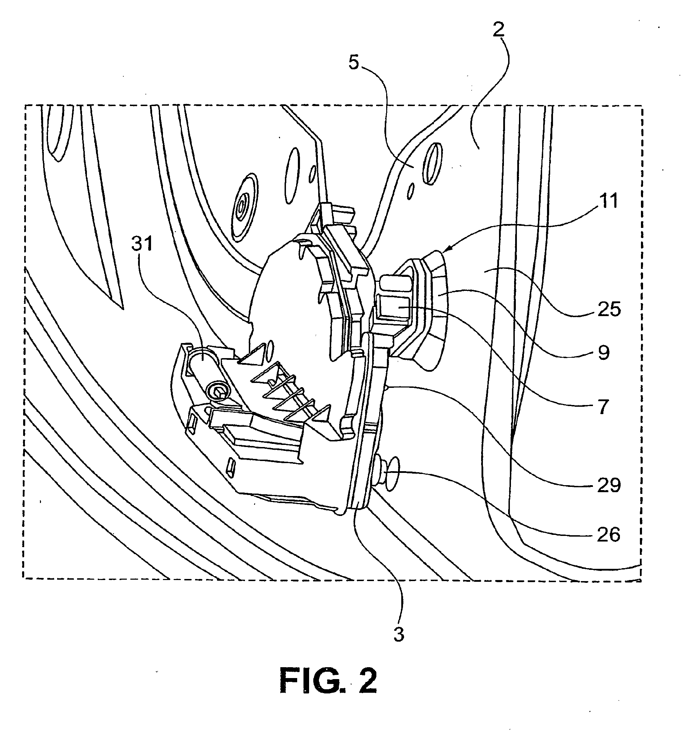

Fig. 2 zeigt in einer perspektivischen Darstellung die Anbringung eines Schlossgehäuses 3 an ein Befestigungsteil 2 nach Art eines Türmodulträgers. Das Schlossgehäuse 3 ist dabei an der ersten Seite 5 des Befestigungsteils 2 montiert. Die Montage des Schlossgehäuses 3 erfolgt über Befestigungsmittel 26, die sich beispielsweise teilweise auch durch das Befestigungsteil 2 hindurch erstrecken. Zusätzlich sind, insbesondere näher hin zum Stecker 7, Abstandshalter 29 vorgesehen, die eine Kippwirkung des Schlossgehäuses 3 um die Befestigungsmittel 26 begrenzen. Das Befestigungsteil 2 ist zudem mit einer Auswölbung 25 versehen, die hin zum Schlossgehäuse 3 hervorsteht. Sie ist flächenmäßig größer als die flexible Manschette 9 und realisiert so zusammen mit der Manschette 9 eine Dichtung 11. Die Abstandshalter 29 und die Befestigungsmittel 26 sind hier beabstandet zu dieser Auswölbung 25 positioniert.

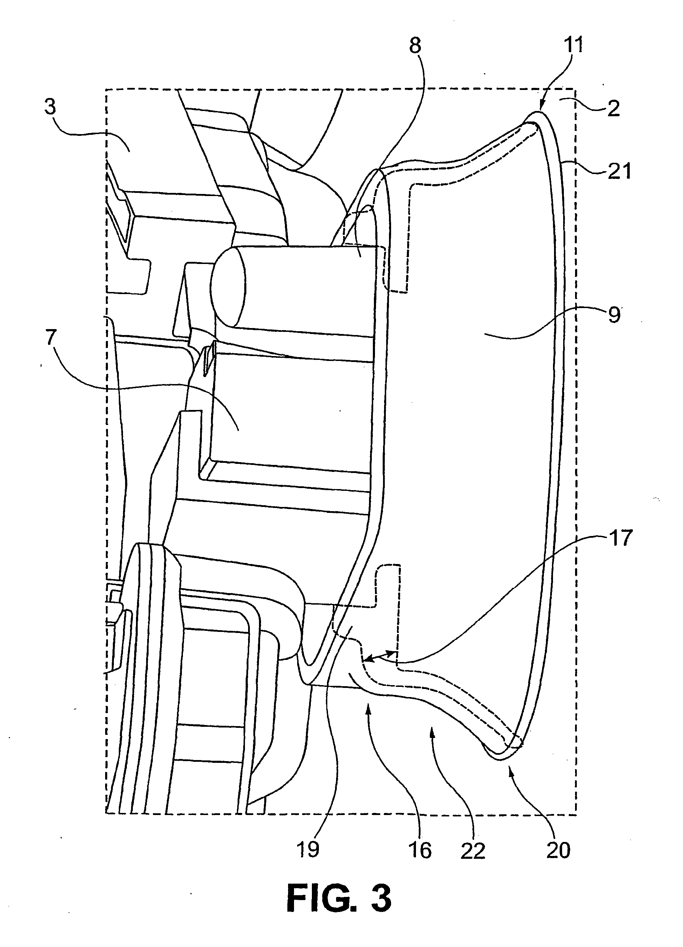

Fig. 3 zeigt erneut schematisch und gleichzeitig einen angedeuteten Querschnitt eine weitere bevorzugte Ausführungsvariante der erfindungsgemäßen Manschette 9. Im linken Teilbereich von Fig. 3 ist erneut das Schlossgehäuse 3 zu erkennen, an dem der separate, externe Stecker 7 positioniert ist. Am Umfang 8 des Steckers 7 liegt die flexible Manschette 9 an. Die Manschette 9 weist im Bereich des Steckers 7 einen Basisabschnitt 16 und im Bereich des Befestigungsteils 2 einen Dichtungsabschnitt 20 auf. Der Basisabschnitt 16 ist mit einer gegenüber den anderen Abschnitten der Manschette 9 größeren Materialstärke 17 sowie einer zusätzlichen, umlaufenden Verstärkungsstruktur 19 ausgebildet. Beide Maßnahmen dienen dazu, auch bei einer Verformung der anderen Abschnitte der flexiblen Manschette 9 eine sichere, feuchtigkeitsdichte Verbindung hin zum Stecker 7 zu realisieren. Im Dichtungsabschnitt 20 ist ebenfalls eine größere Materialstärke 17 festzustellen, welche eine Art Wulst 21 bildet. Der Wulst 21 ist ebenfalls umlaufend ausgebildet und realisiert letztendlich die Dichtung 11 hin zum Befestigungsteil 2. Zwischen dem Basisabschnitt 16 und dem Dichtungsabschnitt 20 ist die Manschette 9 relativ dünnwandig, also mit einer kleinen, insbesondere der kleinsten, Materialstärke 17, ausgeführt. Dadurch wird insbesondere ein Federelement 22 gebildet. Dieses Federelement 22 realisiert einerseits ein sicheres Andrücken der Wulst 21 an das Befestigungsteil 2 und kompensiert gegebenenfalls auch eine Relativbewegung des Steckers 7 bezogen auf das Befestigungsteil 2.

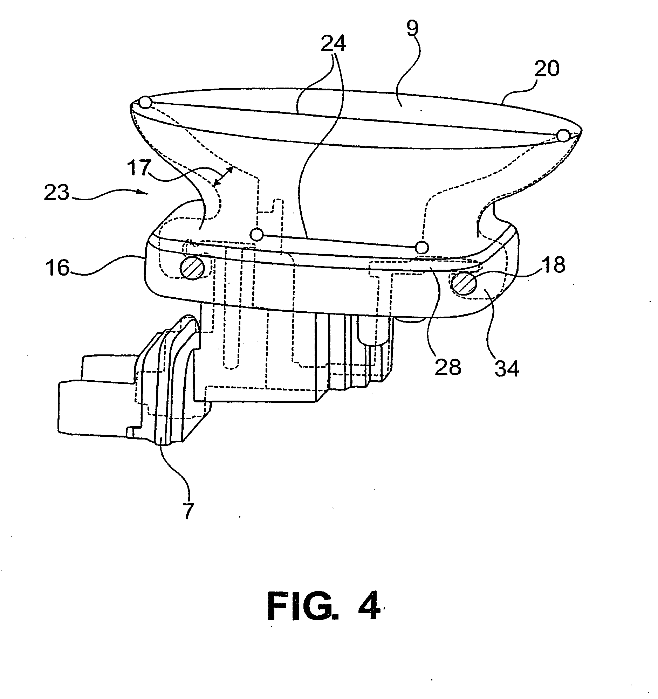

Eine weitere bevorzugte Ausgestaltung der flexiblen Manschette 9 geht aus Fig. 4 hervor. Dort ist im unteren Teilbereich wieder der separate, externe Stecker 7 veranschaulicht. In dieser perspektivischen Darstellung sind zusätzlich Schnittlinien betreffend den Querschnitt der beiden Komponenten dargestellt. Der Stecker 7 ist in dieser Ausführungsvariante mit einem am Umfang positionierten Kragen 28 ausgeführt. Die Manschette 9 erstreckt sich um den Kragen 28 herum und bildet insofern einen Umgriff 34. Zusätzlich ist die flexible Manschette 9 in diesem Bereich mit einer Einlagerung 18 ausgeführt, beispielsweise einem Federring, der den Umgriff 34 sichert. Ausgehend von diesem Basisschnitt 16 der flexiblen Manschette 9 öffnet sich der Öffnungsquerschnitt 24 nach Art eines Konus 23. Bei der hier gezeigten Ausführungsvariante ist zudem der Öffnungsquerschnitt 24 nahe des Basisabschnitts 16 im Wesentlichen rechteckig und im Bereich des Dichtungsabschnitts 20 im Wesentlichen rund ausgeführt. Zur Verwirklichung eines möglichst steifen Basisabschnitts ist die Manschette 9 in diesem Bereich wieder mit einer größeren Materialstärke 17 ausgeführt.

### Bezugszeichenliste

- 1: Vorrichtung
- 2: Befestigungsteil
- 3: Schlossgehäuse
- 4: Öffnung
- 5: erste Seite
- 6: zweite Seite
- 7: Stecker
- 8: Umfang
- 9: Manschette
- 10: Distanz
- 11: Dichtung
- 12: Kraftfahrzeugtür
- 13: Nassraum
- 14: Trockenraum
- 15: Achse
- 16: Basisabschnitt
- 17: Materialstärke
- 18: Einlagerung
- 19: Verstärkungsstruktur
- 20: Dichtungsabschnitt
- 21: Wulst
- 22: Federelement
- 23: Konus
- 24: Öffnungsquerschnitt
- 25: Auswölbung
- 26: Befestigungsmittel
- 27: Schloss
- 28: Kragen
- 29: Abstandshalter
- 30: Kraftfahrzeug
- 31: Motor
- 32: Sensor
- 33: Anschlussstecker
- 34: Umgriff
- 35: Abstand

## Patentansprüche

1. Vorrichtung (1) umfassend ein Schlossgehäuse (3) und ein Befestigungsteil (2) für das Schlossgehäuse (3), bei der ein elektrischer Anschluss durch eine Öffnung (4) des Befestigungsteils (2) hindurch mit dem Schlossgehäuse (3) realisiert ist, wobei das Befestigungsteil (2) ein Türmodulträger einer Kraftfahrzeugtür ist, welches zumindest teilweise einen Nassraum (13) und einen Trockenraum (14) der Kraftfahrzeugtür begrenzt, wobei eine erste Seite (5) des Befestigungsteils (2) hin zum Nassraum (13) ausgerichtet ist, wobei das Schlossgehäuse (3) einen externen Stecker (7) aufweist, und ein Anschlussstecker (33) durch die Öffnung (4) hindurch vom Trockenraum (14) zum Nassraum (13) in den Stecker (7) einführbar ist, ' **dadurch gekennzeichnet, dass** der Stecker (7) beabstandet zum Befestigungsteil (2) positioniert ist und an dessen Umfang (8) eine flexible Manschette (9) befestigt ist, die sich bis zur ersten Seite (5) des Befestigungsteils (2) hin erstreckt und mit einer Distanz (10) zur Öffnung (4) des Befestigungsteils (2) eine Dichtung (11) bildet.

2. Vorrichtung (1) nach Anspruch 1, wobei das Befestigungsteil (2) ein Türmodulträger einer Kraftfahrzeugtür (12) ist, welche zumindest teilweise einen Nassraum (13) und einen Trockenraum (14) der Kraftfahrzeugtür (12) begrenzt, wobei die erste Seite (5) des Befestigungsteils (2) hin zum Nassraum (13) ausgerichtet ist.

3. Vorrichtung (1) nach Anspruch 1 oder 2, wobei der Stecker (7) gegenüber der Öffnung (4) ausgerichtet ist, insbesondere so, dass Stecker (7) und Öffnung (4) auf einer gemeinsamen Achse (15) quer zum Befestigungsteil (2) liegen.

4. Vorrichtung (1) nach einem der vorhergehenden Ansprüche, wobei der Stecker (7) ein vom Schlossgehäuse (3) separat ausgeführtes, und insbesondere ein an das Schlossgehäuse (3) montiertes, Bauteil ist.

5. Vorrichtung (1) nach einem der vorhergehenden Ansprüche, wobei die flexible Manschette (9) aus einem gummiartigen Werkstoff gebildet ist.

6. Vorrichtung (1) nach einem der vorhergehenden Ansprüche, wobei die flexible Manschette (9) am Umfang (8) des Steckers (7) einen Basisabschnitt (16) aufweist, der verstärkt ausgeführt ist, insbesondere aufweisend wenigstens eines der folgenden Merkmale: eine gegenüber anderen Abschnitten der flexiblen Manschette (9) dickeren Materialstärke (17), wenigstens eine Einlagerung (18) aus einem gegenüber anderen Abschnitten der flexiblen. Manschette (9) verschiedenen Material, wenigstens eine Verstärkungsstruktur (19).

7. Vorrichtung (1) nach einem der vorhergehenden Ansprüche, wobei die flexible Manschette (9) am Umfang (8) des Steckers (7) unverlierbar verbunden ist.

8. Vorrichtung (1) nach einem der vorhergehenden Ansprüche, wobei die flexible Manschette (9) in einem Dichtungsabschnitt (20) an dem Befestigungsteil (2) eine, insbesondere umlaufende, Wulst (21) hat.

9. Vorrichtung (1) nach einem der vorhergehenden Ansprüche, wobei die flexible Manschette (9) zwischen einem Basisabschnitt (16) am Umfang (8) des Steckers (7) und einem Dichtungsabschnitt (20) an dem Befestigungsteil (2) ein Federelement (22) bildet, mit dem der Dichtungsabschnitt (20) an das Befestigungsteil (2) gedrückt wird.

10. Vorrichtung (1) nach einem der vorhergehenden Ansprüche, wobei die flexible Manschette (9) an dem Befestigungsteil (2) nur anliegt.

11. Vorrichtung (1) nach einem der vorhergehenden Ansprüche, wobei die flexible Manschette (9) zwischen einem Basisabschnitt (16) am Umfang (8) des Steckers (7) und einem Dichtungsabschnitt (20) an dem Befestigungsteil (2) einen sich hin zum Dichtungsabschnitt (20) öffnenden, insbesondere glatten, Konus (23) bildet.

12. Vorrichtung (1) nach einem der vorhergehenden Ansprüche, wobei die flexible Manschette (9) einem Basisabschnitt (16) am Umfang (8) des Steckers (7) und einem Dichtungsabschnitt (20) an dem Befestigungsteil (2) bildet, wobei Basisabschnitt (16) und Dichtungsabschnitt (20) einen voneinander verschiedenen Öffnungsquerschnitt (24) aufweisen.

13. Vorrichtung (1) nach einem der vorhergehenden Ansprüche, wobei das Befestigungsteil (2) im Bereich der Öffnung (4) eine Auswölbung (25) hin zum Schlossgehäuse (3) aufweist.

14. Vorrichtung nach Anspruch 13, wobei das Schlossgehäuse (3) mit Befestigungsmitteln (26) an dem Befestigungsteil (2) fixiert ist, welche von der Auswölbung (25) beabstandet sind.

15. Vorrichtung (1) nach einem der vorhergehenden Ansprüche, wobei der Stecker (7) alle elektrischen Anschlüsse zum Betrieb des Schlosses (27) umfasst.

16. Vorrichtung (1) nach einem der vorhergehenden Ansprüche, wobei der Stecker (7) an seinem Umfang (8) mit einem Kragen (28) ausgeführt ist, der von einem Basisabschnitt (16) der flexiblen Manschette (9) umgriffen ist.

17. Vorrichtung (1) nach einem der vorhergehenden Ansprüche, wobei das Schlossgehäuse (3) Abstandshalter (29) hin zum Befestigungsteil (2) aufweist.

## Claims

1. Device (1) comprising a lock housing (3) and a fastening part (2) for the lock housing (3), in which an electrical connection to the lock housing (3) is implemented through an opening (4) of the fastening part (2), wherein the fastening part (2) is a door module carrier of a motor vehicle door, limiting at least partly a wet area (13) and a dry area (14) of the motor vehicle door, wherein a first side (5) of the fastening part (2) is facing the wet area (13), wherein the lock housing (3) has an external plug (7) and wherein a connector (33) can be inserted through the opening (4) from the dry room (14) to the wet room (13) into the plug (7), **characterized in that** the plug (7) is positioned at a distance to the fastening part (2) and on the circumference (8) of which a flexible sleeve (9) is attached, extending to the first side (5) of the fastening part (2) and forming a seal (11) with a distance (10) to the opening (4) of the fastening part (2).

2. Device (1) according to claim 1, in which the fastening part (2) is a door module carrier of a motor vehicle door (12) providing at least partially a boundary between a wet region (13) and a dry chamber (14) of the motor vehicle door (12) in which the first side (5) of the fastening part (2) is facing the wet region (13).

3. Device (1) according to claim 1 or 2, in which the plug (7) is arranged opposite the opening (4) and in particular in such a way that the plug (7) and opening (4) are positioned on a common axis (15) transversely to the fastening part (2).

4. Device (1) according to one of the preceding claims in which the plug (7) is a separate component from the lock housing (3) and in particular a component mounted on the lock housing (3).

5. Device (1) according to one of the preceding claims in which the flexible collar (9) is formed from a rubber-like material.

6. Device (1) according to one of the preceding claims in which the flexible collar (9) contains a basic section (16) at the circumference (8) of the plug (7) that is reinforced, featuring in particular at least one of the following characteristics: a greater material thickness (17), than that of the other sections of the flexible collar (9), at least one embedment (18) of a material different to that of other sections of the flexible collar (9), at least one reinforcement structure (19).

7. Device (1) according to one of the preceding claims in which the flexible collar (9) is captively attached to the circumference (8) of the plug (7).

8. Device (1) according to one of the preceding claims in which the flexible collar (9) contains an in particular circumferential bead (21) in a sealing section (20) on the fastening part (2).

9. Device (1) according to one of the preceding claims in which the flexible collar (9) forms a spring element (22) between a basic section (16) at the circumference (8) of the plug (7) and a sealing section (20) on the fastening part (2) with which the sealing section (20) is pressed against the fastening part (2).

10. Device (1) according to one of the preceding claims in which the flexible collar (9) only abuts against the fastening part (2).

11. Device (1) according to one of the preceding claims in which the flexible collar (9) forms an in particular smooth cone (23) between a basic section (16) at the circumference (8) of theplug (7) and a sealing section (20) at the fastening part (2), said cone opening towards the sealing section (20).

12. Device (1) according to one of the preceding claims in which the flexible collar (9) forms a basic section (16) at the circumference (8) of the plug (7) and a sealing section (20) at the fastening part (2) and in which the basic section (16) and sealing section (20) have opening cross sections (24) that differ from each other.

13. Device (1) according to one of the preceding claims in which the fastening part (2) in the area of the opening (4) contains a dome shape (25) towards the lock housing (3).

14. Device according to claim 13, in which the lock housing (3) is fixed to the fastening part (2) with fastening means (26) that are spaced apart from the dome shape (25).

15. Device (1) according to one of the preceding claims in which the plug (7) comprises all electrical connections for the operation of the lock (27).

16. Device (1) according to one of the preceding claims in which the plug (7) has a neck (28) at its circumference (8) surrounded by a basic section (16) of the flexible collar (9).

17. Device (1) according to one of the preceding claims in which the lock housing (3) contains spacers (29) towards the fastening part (2).

## Revendications

1. Dispositif (1) comprenant un boîtier de serrure (3) et un élément de fixation (2) pour le boîtier de serrure (3), dispositif dans lequel une connexion électrique est réalisée avec le boîtier de serrure (3) passant par une ouverture (4) de l'élément de fixation (2), l'élément de fixation (2) étant un support de module de porte d'une porte de véhicule automobile qui délimite en partie un espace humide (13) et un espace sec (14) de la porte de véhicule automobile, un premier côté (5) de l'élément de fixation (2) étant orienté vers l'espace humide (13), le boîtier de serrure (3) présentant un élément enfichable externe (7) et, une fiche de raccordement (33) pouvant être introduite, passant de l'ouverture (4) de l'espace sec (14) à l'espace humide (13), dans l'élément enfichable (7),
**caractérisée en ce que** l'élément enfichable (7) est positionné à distance de l'élément de fixation (2), et à la périphérie (8) duquel est fixée une manchette flexible (9) qui s'étend jusqu'au premier côté (5) de l'élément de fixation (2) et forme un joint (11) avec une distance (10) par rapport à l'ouverture (4) de l'élément de fixation (2).

2. Dispositif (1) selon la revendication 1, l'élément de fixation (2) étant un support modulaire de porte d'une porte de véhicule automobile (12) qui limite au moins en partie un espace humide (13) et un espace sec (14) de la porte de véhicule automobile (12), le premier côté (5) de l'élément de fixation (2) étant positionnée jusque dans l'espace humide (13).

3. Dispositif (1) selon la revendication 1 ou 2, l'élément enfichable (7) étant positionné à l'opposé de l'ouverture (4), en particulier de façon que l'élément enfichable (7) et l'ouverture (4) se trouvent sur un axe (15) commun transversalement à l'élément de fixation (2).

4. Dispositif (1) selon l'une des revendications précédentes, l'élément enfichable (7) étant un élément exécuté séparément du boîtier de serrure (3) et en particulièrement monté au boîtier de serrure (3).

5. Dispositif (1) selon l'une des revendications précédentes, la manchette flexible (9) est formée à partir d'un matériau caoutchouteux.

6. Dispositif (1) selon l'une des revendications précédentes, la manchette flexible (9) présentant à la périphérie (8) de l'élément enfichable (7) une partie de base (16) exécutée de façon renforcée, en particulier présentant au moins l'une des caractéristiques suivantes : une épaisseur de matériau (17) plus élevée par rapport aux autres parties de la manchette flexible (9), au moins un logement (18) en un matériau différent par rapport aux autres parties de la manchette flexible (9), au moins une structure de renforcement (19).

7. Dispositif (1) selon l'une des revendications précédentes, la manchette flexible (9) étant associée à la périphérie (8) de l'élément enfichable (7) de façon imperdable.

8. Dispositif (1) selon l'une des revendications précédentes, la manchette flexible (9) possédant dans une partie de joint (20) à l'élément de fixation (2) un bourrelet (21), en particulier circonférentiel.

9. Dispositif (1) selon l'une des revendications précédentes, la manchette flexible (9) formant, entre une partie de base (16) à la périphérie (8) de l'élément enfichable (7) et une partie de joint (20) à l'élément de fixation (2), un élément ressort (22) pressant la partie de joint (20) à l'élément de fixation (2).

10. Dispositif (1) selon l'une des revendications précédentes, la manchette flexible (9) ne pose que contre l'élément de fixation (2).

11. Dispositif (1) selon l'une des revendications précédentes, la manchette flexible (9) formant un cône (23) s'ouvrant vers la partie de joint (20), en particulier lisse, entre une partie de base (16) à la périphérie (8) de l'élément enfichable (7) et une partie de joint (20) à l'élément de fixation (2).

12. Dispositif (1) selon l'une des revendications précédentes, la manchette flexible (9) formant une partie de base (16) à la périphérie (8) de l'élément enfichable (7) et un partie de joint (20) à l'élément de fixation (2), la partie de base (16) et la partie de joint (20) présentant une section d'ouverture (24) différentes l'une de l'autre.

13. Dispositif (1) selon l'une des revendications précédentes, l'élément de fixation (2) présentant dans la zone de l'ouverture (4) une forme bombée (25) vers le boîtier de serrure (3).

14. Dispositif selon la revendication 13, le boîtier de serrure (3) étant fixé à l'élément de fixation (2) avec des moyens de fixation (26) qui sont placés à distance de la forme bombée (25).

15. Dispositif (1) selon l'une des revendications précédentes, l'élément enfichable (7) comprenant tous les raccordements électriques permettant le fonctionnement de la serrure (27)

16. Dispositif (1) selon l'une des revendications précédentes, l'élément enfichable (7) étant exécuté à sa périphérie (8) avec un rebord (28) qui est enveloppé par une partie de base (16) de la manchette flexible (9).

17. Dispositif (1) selon l'une des revendications précédentes, le boîtier de serrure (3) un écarteur (29) vers l'élément de fixation (2).
